# EUROPÄISCHE PATENTSCHRIFT

(11) **EP 1 429 066 B1**
(45) Veröffentlichungstag und Bekanntmachung des Hinweises auf die Patenterteilung: **07.03.2007**
(21) Anmeldenummer: 02027991.5
(22) Anmeldetag: 14.12.2002
(51) Int. Cl.: F16L 37/12, F16L 23/036

(54) **Klammer zur Befestigung und Verbindung von Rohren**
Clamp for fixing and connecting pipes
Agrafe pour la fixation et le raccordement de tuyaux

(43) Veröffentlichungstag der Anmeldung: 16.06.2004
(73) Patentinhaber: Behr GmbH & Co. KG, 70469 Stuttgart (DE); Behr France Rouffach SAS, 68250 Rouffach (FR)
(72) Erfinder: Auchter, Holer, 70567 Stuttgart (DE); Brun, Michel, 68740 Rustenhart (FR)
(74) Vertreter: Grauel, Andreas

(56) Entgegenhaltungen:
- DE-A- 3 026 221
- DE-A- 19 953 129
- FR-A- 2 188 779
- FR-A- 2 360 028
- US-A- 4 913 468

## Beschreibung

Die Erfindung betrifft eine Klammer zur Befestigung und Verbindung von Rohren, insbesondere zur Befestigung eines Anschlussrohrs an einem Wärmetauscher in einem Kraftfahrzeug.

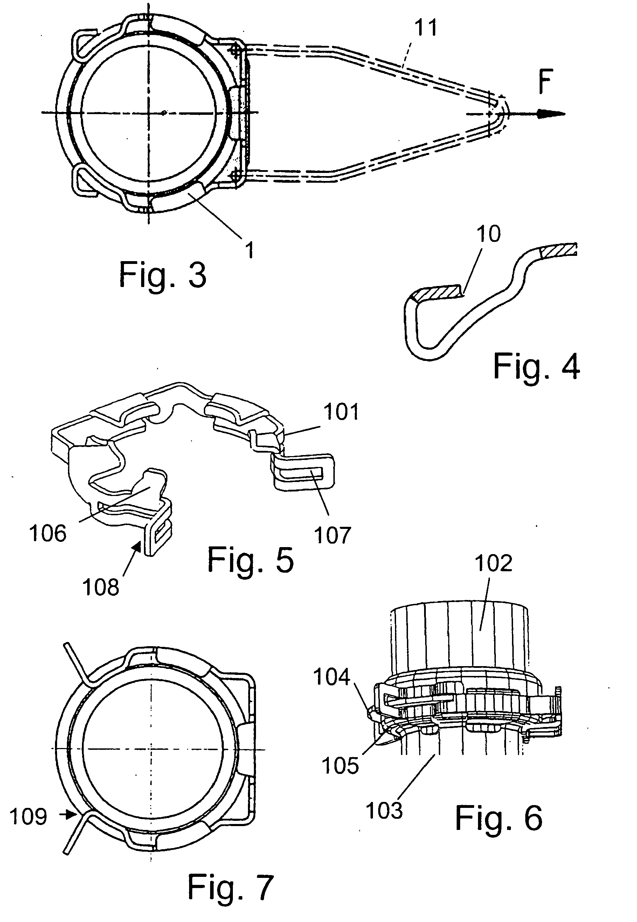

Die Figuren 5 bis 7 zeigen eine herkömmliche, eingebaute Klammer 101, die zur Verbindung zweier Rohre 102, 103 eines Kraftfahrzeug-Wärmetauschers dient. Eines der Rohre 102 ist an seinem Ende mit einem ersten Flansch 104 versehen. Das andere, in das erste Rohr 102 leicht eingeführte zweite Rohr 103 ist etwas beabstandet von seinem Ende mit einem einen zweiten Flansch 105 bildenden, umlaufenden Wulst versehen, der einen kleineren Außendurchmesser als der erste Flansch 104 aufweist. Bei der Klammer 101 handelt es sich um ein gestanztes Blech-Biegeteil, das symmetrisch ausgebildet ist. Die Klammer 101 weist mehrere umgebogene Laschen 106 und zwei in Längsrichtung der Klammer 101 verlaufende Schlitzen 107 im Endbereich 108 der Klammer 101 zum Positionieren der Klammer 101 und zum Zusammenpressen der beiden Rohre 102, 103 auf. Zum Vereinfachen des Zusammenbaus ist die Klammer 101 jeweils im Endbereich 108 mit einer Einführschräge 109 versehen. Ferner sind sämtliche Kanten zur besseren Handhabbarkeit abgerundet. Eine derartige Klammer ist gut handhabbar, lässt jedoch in Hinblick auf einen Missbrauch, wie ein versehentliches Abziehen der Klammer, noch Wünsche offen

Die DE 199 53 129 A1 offenbart eine Klammer, deren Enden nach außen abstehen und daher relativ leicht abgezogen werden können.

Die FR-A-2360028 offenbart eine Klammer, die auf einer Seiten mit einem Rohr verschraubt ist und die an ihrem anderen Ende an einem Wulst verhakt sind.

Die DE 30 26 221 A1 offenbart eine Befestigungsvorrichtung zum Abhängen von Rohren.

Es ist Aufgabe der Erfindung, eine verbesserte Klammer zur Befestigung und Verbindung von Rohren zur Verfügung zu stellen.

Diese Aufgabe wird gelöst durch eine Klammer mit den Merkmalen des Anspruchs 1. Vorteilhafte Ausgestaltungen sind Gegenstand der Unteransprüche.

Erfindungsgemäß ist eine Klammer zur Befestigung und Verbindung von Rohren vorgesehen, bei der zumindest ein Endbereich der Klammer zurückgebogen ist. Die Klammer umgreift dabei die beiden, vorzugsweise etwas ineinandergeschobenen Rohre. Dabei liegt der zurückgebogene Endbereich vorzugsweise an der Außenmantelfläche eines Flansches zumindest eines der zu verbindenden Rohre an. Die Klammer kann - trotz einer in Vergleich mit dem Stand der Technik - verringerten Einfuhrschräge einfach an den vorpositionierten Rohren angesetzt und eingeschnappt werden. Auf Grund des weniger nach außen ragenden Endbereichs lässt sich die Klammer nicht so leicht greifen und entfernen, so dass sie in Hinblick auf einen Missbrauch sicherer ist. Auch stützt sich der Endbereich des umgebogenen Endes der Klammer an dem Flansch oder dem Wulst des Rohres ab und krallt sich bei dem Versuch des Entfernens der Klammer in das Rohr, so dass das Entfernen dem Klammer erschwert wird.

Vorzugsweise weist die Klammer im zurückgebogenen Endbereich eine scharfkantige Kante auf, insbesondere im Anlagebereich an den Flansch. Schnappt die Klammer beim Zusammenbauen in ihre Endposition, so erfolgt vorzugsweise eine leichte plastische Verformung des Flansches auf Grund des Eingreifens der scharfen Kante, d.h. die Klammer "beißt" sich am Flansch fest.

Zur Erhöhung der Sicherheit in Hinblick auf ein unbefugtes Entfernen sind an der Klammer keine oder nur maximal eine nach außen abstehende Lasche vorgesehen, so dass das Entfernen der Klammer mangels Angriffsmöglichkeiten erschwert wird.

Vorzugsweise sind die Endbereiche der Klammer derart zurückgebogen sind, dass sie annähernd die Form eines abgerundeten Dreiecks bilden, wobei bevorzugt keiner der Winkel des Dreiecks größer als 90° ist. Vorzugsweise ist das Dreieck annährend gleichseitig, d.h. alle Winkel liegen im Bereich von etwa 60° +/- 10°. Die Dreiecke sind dabei in einer Ebene senkrecht zur Querachse ausgebildet.

Bevorzugt ist ein Schlitz im Bereich mindestens eines Endbereichs der Klammer vorgesehen, der in Längsrichtung der Klammer verläuft. In diesem Schlitz wird zumindest einer der Flansche aufgenommen, so dass die Klammer richtig positioniert wird. Der Schlitz verläuft vorzugsweise über zwei Seiten des entsprechenden Dreiecks, wobei er etwa im Bereich der radial äußersten Ecke des Dreiecks endet.

Bevorzugt ist die Klammer im wesentlichen symmetrisch bezüglich einer Querachse ausgebildet, d.h. es kann durchaus auch ein asymmetrisch angeordnetes Element, bspw. eine Lasche, vorgesehen sein, jedoch sind die Endbereiche spiegelbildlich ausgestaltet. Dabei verläuft die Querachse im eingebauten Zustand parallel zur Längsachse der zu verbindenden und sichernden Rohre.

Im folgenden wird die Erfindung anhand eines Ausführungsbeispiels unter Bezugnahme auf die Zeichnung im einzelnen erläutert. In der Zeichnung zeigen:
- Fig. 1: eine Ansicht einer erfindungsgemäßen Klammer,
- Fig. 2: eine Ansicht der Klammer von Fig. 1 in eingebautem Zustand,
- Fig. 3: eine vereinfacht dargestellte Draufsicht auf die eingebaute Klammer entsprechend Fig. 2,
- Fig. 4: eine mittig geschnitten dargestellte Detailansicht der Klammer von Fig. 1,
- Fig. 5: eine Klammer gemäß dem Stand der Technik in einer Fig. 1 entsprechenden Ansicht,
- Fig. 6: eine Ansicht der herkömmlichen Klammer von Fig. 5 in eingebautem Zustand, und
- Fig. 7: eine vereinfacht dargestellte Draufsicht auf die eingebaute, herkömmliche Klammer entsprechend Fig. 6.

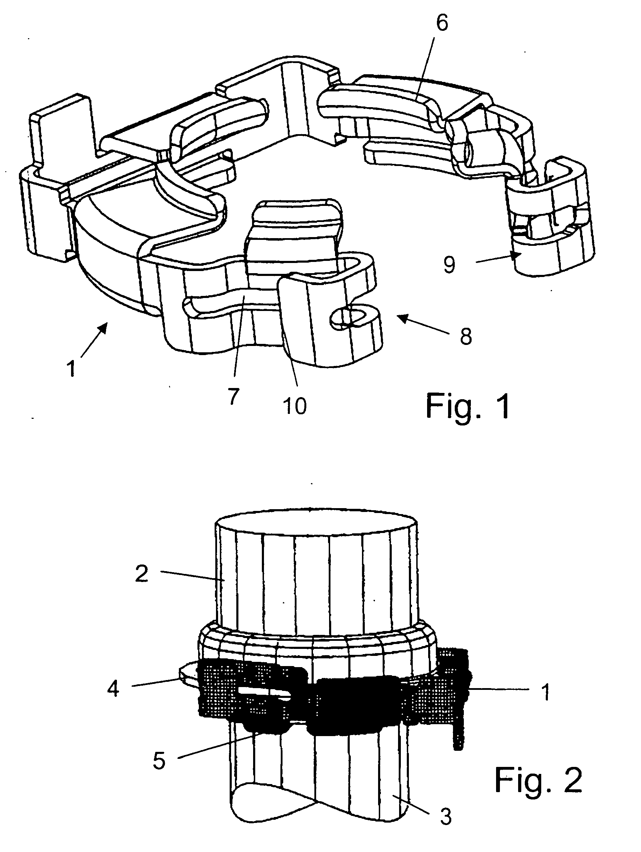

Eine erfindungsgemäße Klammer 1, wie sie in den Figuren 1 bis 4 dargestellt ist, dient insbesondere zur Verbindung zweier Rohre 2 und 3 oder eines Rohres mit einem Anschluss eines Kraftfahrzeug-Wärmetauschers. Hierbei ist - entsprechend dem Stand der Technik - eines der Rohre 2 an seinem Ende mit einem ersten Flansch 4 versehen, das andere, in das erste Rohr 2 leicht eingeführte zweite Rohr 3 ist etwas beabstandet von seinem Ende mit einem einen zweiten Flansch 5 bildenden, umlaufenden Wulst versehen, der einen kleineren Außendurchmesser als der erste Flansch 4 aufweist.

Die Klammer 1 ist im wesentlichen symmetrisch in Bezug auf die Querachse ausgebildet. Dabei verläuft die Querachse im eingebauten Zustand parallel zur Längsachse der zu verbindenden und sichernden Rohre 2, 3. Die Klammer 1 weist mehrere Laschen 6 auf, die umgebogen sind und zur Positionierung und Fixierung der Rohre 2, 3 dienen. Ferner sind, symmetrisch bezüglich der Querachse ausgebildet, zwei in Längsrichtung der Klammer 1 verlaufende Schlitze 7 in den beiden Endbereichen 8 der Klammer 1 vorgesehen. Diese Schlitze 7 umgreifen den ersten Flansch 4 und dienen zur Positionierung und Fixierung der Klammer 1 in Bezug auf das Rohr 2.

Auf Grund der symmetrischen Ausgestaltung wird im folgenden nur ein Endbereich 8 der Klammer 1 beschrieben.

Der Endbereich 8 der Klammer 1 ist, wie aus Fig. 4 ersichtlich ist, zurückgebogen. Dabei bildet der Endbereich 8 etwa die Form eines abgerundeten, rechtwinkligen Dreiecks. Der Schlitz 7 verläuft hierbei über zwei der drei Dreieckseiten und endet etwa im radial gesehen äußersten Eck. Das Ende 10 der Klammer 1 ist so weit umgebogen, dass es mit einer Kante am Flansch 4 anliegt (vgl. Fig. 3). Dabei ist die Kante scharfkantig ausgestaltet, so dass es beim Zusammenbau zu plastischen Verformungen des Flansches 4 kommen kann und sich die Klammer 1 "festbeißt". Die anderen Kanten der Klammer 1 sind jedoch zur besseren Handhabbarkeit abgerundet.

Zur Vereinfachung des Zusammenbaus ist eine leichte Einfuhrschräge 9 auf der radial innen gelegenen Seite des durch den Endbereich 8 gebildeten Dreieckes vorgesehen.

Für den Zusammenbau werden die Rohre 2 und 3 positioniert und die Klammer 1 in Art eines Clipses drübergeschoben. Zur Überprüfung der Verbindung wird, wie in Fig. 3 dargestellt, mit einem Ziehdorn 11 die Abziehkraft kontrolliert.

### Bezugszeichenliste

- 1, 101: Klammer
- 2, 102: Rohr
- 3, 103: Rohr
- 4, 104: Flansch
- 5, 105: Flansch
- 6, 106: Lasche
- 7,107: Schlitz
- 8, 108: Endbereich
- 9, 109: Einfuhrschräge
- 10: Ende
- 11: Ziehdorn

## Patentansprüche

1. Klammer zur Befestigung und Verbindung von Rohren (2, 3), insbesondere zur Befestigung eines Anschlussrohrs an einem Wärmetauscher in einem Kraftfahrzeug, wobei die Klammer eine im Wesentlichen C-förmige Gestalt aufweist und in radialer Richtung aufsteckbar ist und in axialer Rohrrichtung auf beiden Seiten Klammerzungen aufweist und wobei zumindest ein Endbereich (8) der Klammer (1) zurückgebogen ist, **dadurch gekennzeichnet, dass** die Endbereiche (8) der Klammern (1) derart zurück gebogen sind, dass sie annähernd die Form eines abgerundeten Dreiecks bilden und dass der zurück gebogene Endbereich (8) im zusammengebauten Zustand in Anlage an zumindest einen Flansch (4) oder Wulst eines Rohrs (2) ist, so dass sich beim Versuch des Entfernens der Klammer der Endbereich des umgebogenen Endes in den Flansch oder Wulst des Rohres (2) krallt und ein Entfernen der Klammer erschwert.

2. Klammer nach Anspruch 1, **dadurch gekennzeichnet, dass** der zurückgebogene Endbereich (8) der Klammer (1) zumindest eine scharfkantige Kante aufweist.

3. Klammer nach Anspruch 2, **dadurch gekennzeichnet, dass** der zurückgebogene Endbereich im Bereich der Anlage scharfkantig ausgebildet ist.

4. Klammer nach einem der vorhergehenden Ansprüche, **dadurch gekennzeichnet, dass** maximal eine im zusammengebauten Zustand in radialer Richtung nach außen abstehende Lasche (6) an der Klammer (1) vorgesehen ist.

5. Klammer nach Anspruch 4, **dadurch gekennzeichnet, dass** keine abstehende Lasche an der Klammer (1) vorgesehen ist.

6. Klammer nach zumindest einem der vorhergehenden Ansprüche, **dadurch gekennzeichnet, dass** die Dreiecke keinen Winkel über 90° aufweisen.

7. Klammer zumindest einem der vorhergehenden Ansprüche, **dadurch gekennzeichnet, dass** die Dreiecke annähernd gleichseitig sind.

8. Klammer nach einem der vorhergehenden Ansprüche, **dadurch gekennzeichnet, dass** ein Schlitz (7) im Bereich mindestens eines Endbereichs (8) der Klammer (1) vorgesehen ist, der in Längsrichtung der Klammer (1) verläuft.

9. Klammer nach zumindest einem der vorhergehenden Ansprüche, **dadurch gekennzeichnet, dass** der Schlitz (7) über zwei Seiten des entsprechenden Dreiecks verläuft.

10. Klammer nach einem der vorstehenden Ansprüche, **dadurch gekennzeichnet, dass** die Klammer (1) im wesentlichen symmetrisch bezüglich einer Querachse ausgebildet ist.

## Claims

1. Clamp for fixing and connecting pipes (2, 3), in particular for fixing a connection tube to a heat exchanger in a motor vehicle, such that the clamp is essentially C-shaped and can be put on in the radial direction and has clamp jaws on both sides in the axial direction of the pipe, at least one end area (8) of the clamp (1) being bent back,
**characterised in that**
the end zones (8) of the clamp (1) are bent back in such manner that they form approximately the shape of a rounded triangle and in the fitted condition the bent-back end zone (8) is in contact with at least one flange (4) or bead of a pipe (2), such that an attempt to remove the clamp will dig the end area of the bent-round end into the flange or bead of the pipe (2) and so make the removal of the clamp more difficult.

2. Clamp according to Claim 1,
**characterised in that**
the bent-back end zone (8) of the clamp (1) has at least one sharp edge.

3. Clamp according to Claim 2,
**characterised in that**
the bent-back zone is sharp in its contact area.

4. Clamp according to any of the preceding claims,
**characterised in that**
at most one butt strap (6) projecting outwards in the radial direction in the fitted condition is provided on the clamp (1).

5. Clamp according to Claim 4,
**characterised in that**
no projecting butt-strap is provided on the clamp (1).

6. Clamp according to at least one of the preceding claims,
**characterised in that**
the triangles have no angle greater than 90°.

7. Clamp according to at least one of the preceding claims,
**characterised in that**
the triangles are approximately equilateral.

8. Clamp according to any of the preceding claims,
**characterised in that**
a slot (7) is provided in the area of at least one end zone (8) of the clamp (1), which extends in the longitudinal direction of the clamp (1).

9. Clamp according to at least one of the preceding claims,
**characterised in that**
the slot (7) extends over two sides of the corresponding triangle.

10. Clamp according to any of the preceding claims,
**characterised in that**
the clamp (1) is of essentially symmetrical shape relative to a transverse axis.

## Revendications

1. Agrafe de serrage pour la fixation et le raccordement de tubes (2, 3), en particulier pour la fixation d'un tube de raccordement à un échangeur thermique dans un véhicule automobile, l'agrafe de serrage étant configurée sensiblement en forme de C et pouvant être mise en place dans le sens radial et comportant des languettes sur les deux côtés dans le sens axial du tube, et au moins une zone d'extrémité (8) de l'agrafe de serrage (1) étant pliée vers l'arrière, **caractérisée en ce que** les zones d'extrémité (8) des agrafes de serrage (1) sont pliées vers l'arrière de telle sorte qu'elles forment à peu près un triangle arrondi et **en ce que**, dans la position assemblée, la zone d'extrémité (8) pliée vers l'arrière est en appui contre au moins un collet (4) ou un bourrelet d'un tube (2), de telle sorte qu'en cas de tentative d'enlèvement de l'agrafe de serrage, la zone d'extrémité de l'extrémité pliée s'agrippe dans le collet ou le bourrelet du tube (2) et rend difficile l'enlèvement de l'agrafe de serrage.

2. Agrafe de serrage selon la revendication 1, **caractérisé en ce que** la zone d'extrémité (8) pliée vers l'arrière de l'agrafe de serrage (1) comporte au moins un bord à arête vive.

3. Agrafe de serrage selon la revendication 2, **caractérisé en ce que** la zone d'extrémité (8) pliée vers l'arrière est réalisée avec une arête vive dans la zone de l'appui.

4. Agrafe de serrage selon au moins une des revendications précédentes, **caractérisée en ce qu'**il est prévu sur l'agrafe de serrage (1) au maximum une patte (6) qui, dans la position assemblée, est en saillie vers l'extérieur dans la direction radiale.

5. Agrafe de serrage selon la revendication 4, **caractérisé en ce qu'**il n'est prévu aucune patte sur l'agrafe de serrage (1).

6. Agrafe de serrage selon au moins une des revendications précédentes, **caractérisée en ce que** les triangles n'ont aucun angle supérieur à 90°.

7. Agrafe de serrage selon au moins une des revendications précédentes, **caractérisée en ce que** les triangles sont sensiblement des triangles équilatéraux.

8. Agrafe de serrage selon au moins une des revendications précédentes, **caractérisée en ce que**, dans la zone d'au moins une zone d'extrémité (8) de l'agrafe de serrage (1), il est prévu une fente (7) qui s'étend dans le sens longitudinal de l'agrafe de serrage (1).

9. Agrafe de serrage selon au moins une des revendications précédentes, **caractérisée en ce que** la fente (7) s'étend sur deux côtés du triangle correspondant.

10. Agrafe de serrage selon au moins une des revendications précédentes, **caractérisée en ce que** l'agrafe de serrage (1) est réalisée sensiblement symétriquement par rapport à un axe transversal.
